Europäisches Patentamt

European Patent Office

Office européen des brevets

(11) Publication number: **0 336 313**
**A1**

# EUROPEAN PATENT APPLICATION

(21) Application number: **89105692.1**

(51) Int. Cl.4: **B60P 3/12**

(22) Date of filing: **31.03.89**

(30) Priority: **05.04.88 IT 4157188**

(43) Date of publication of application:
**11.10.89 Bulletin 89/41**

(84) Designated Contracting States:
**AT BE DE ES FR NL**

(71) Applicant: **ISOLI S.p.A.**
**Via Boschi, 1/C**
**I-35014 Fontaniva (Padova)(IT)**

(72) Inventor: **Isoli, Gino**
**Via Breda 11**
**I-35014 Fontaniva Padova(IT)**

(74) Representative: **Modiano, Guido et al**
**MODIANO, JOSIF, PISANTY & STAUB**
**Modiano & Associati Via Meravigli, 16**
**I-20123 Milan(IT)**

(54) **Device for lowering vehicle loading platform.**

(57) The device can be installed on a vehicle (1) equipped for loading and transporting motor vehicles, and comprises an element (14) which is slidabl,y coupled to the chassis (2) of the vehicle (1) and is connected to the rear axle (13) thereof by cable-like tension elements (21) with interposed pulley transmission elements (23). The backward motion of the element (14) towards the rear of the vehicle (1) is actuated by the slidable tilt-down platform (8), flexing the vehicle's suspension and consequently lowering the loading platform (8) level. Return springs allow return of the element (14) when the platform (8) is moved towards the front of the vehicle (1).

FIg. 2

## DEVICE FOR LOWERING VEHICLE LOADING PLATFORM

The present invention relates to a device for lowering a vehicle loading platform, such as, e.g., the loading platform of a vehicle equipped for loading and transporting motor vehicles.

As known, there is currently a need to reduce the degree of inclination of the ramps used for lifting motor vehicles onto transport trucks, so as to facilitate loading.

The current constructive art of motor vehicles in fact provides bodywork which downwardly terminates at a short distance from the ground, such as occurs, e.g., when the bodywork includes air dams, skirts, etc., which would scrape on the loading platform and cause damage to the vehicle's bodywork if the vehicle was loaded while the platform was steeply inclined.

The same disadvantage is encountered when the motor vehicle to be transported has malfunctions affecting its tires and/or suspension, consequently lowering the ground-clearance height of the bodywork.

Car transporter vehicles are known which comprise a platform rigidly coupled to the chassis of the transporter vehicle at the rear loading region thereof, wherein the platform can be caused to slide backwards and tilt downwardly to define an ascent ramp.

Fluid-dynamic devices, constituted by jacks and lever systems adapted to telescope the rear suspensions inward, are used to lower the loading level and reduce the inclination of the ramp.

Though said jacks and lever systems perform this task satisfactorily, they are not devoid of disadvantages, not least of which resides in the fact that they compulsorily require a separate fluid-dynamic circuit and corresponding actuation means which complicate their constructive characteristics.

Another disadvantage encountered in the use of the known devices resides in the fact that the actuation of the known lowering devices is currently independent of the movement of the other elements adapted to prepare the transport vehicle for the loading of a car, since the devices must be actuated directly before and after the loading step.

The aim of the present invention is to provide a device for lowering a vehicle loading platform which overcomes the problems encountered in the use of the known devices and which can be actuated as a consequence of the movement of other elements adapted to prepare a vehicle for loading.

Within the scope of the above described aim, an important object of the invention is to provide a device for lowering a vehicle loading platform which acts directly on the rear axle, thereby varying its suspension configuration.

Another important object of the invention is to provide a device for lowering a vehicle loading platform which comprises a reduced number of elements, and which can be actuated without the presence of any fluid-dynamic circuit.

Still another object of the invention is to provide a device for lowering a vehicle loading platform which automatically restores the normal ground height of the loading platform at the end of the loading operation.

A not least object of the invention is to provide a device for lowering a vehicle loading platform which allows, when it is idle, an excursion of the suspensions for normal road travelling.

This aim, these objects and others which will become apparent hereinafter are achieved by a device for lowering a vehicle loading platform, as defined in claim 1.

Further characteristics and advantages of the invention will become apparent from the detailed description of a preferred embodiment thereof, illustrated only by way of non-limitative example in the accompanying drawings, wherein:

figure 1 is a schematic side view of a truck for transporting cars, equipped with the device for lowering the loading platform according to the invention, in a normal road travelling condition;

figure 2 is a schematic side view of the truck of figure 1 in static position and in the configuration adapted for loading a car;

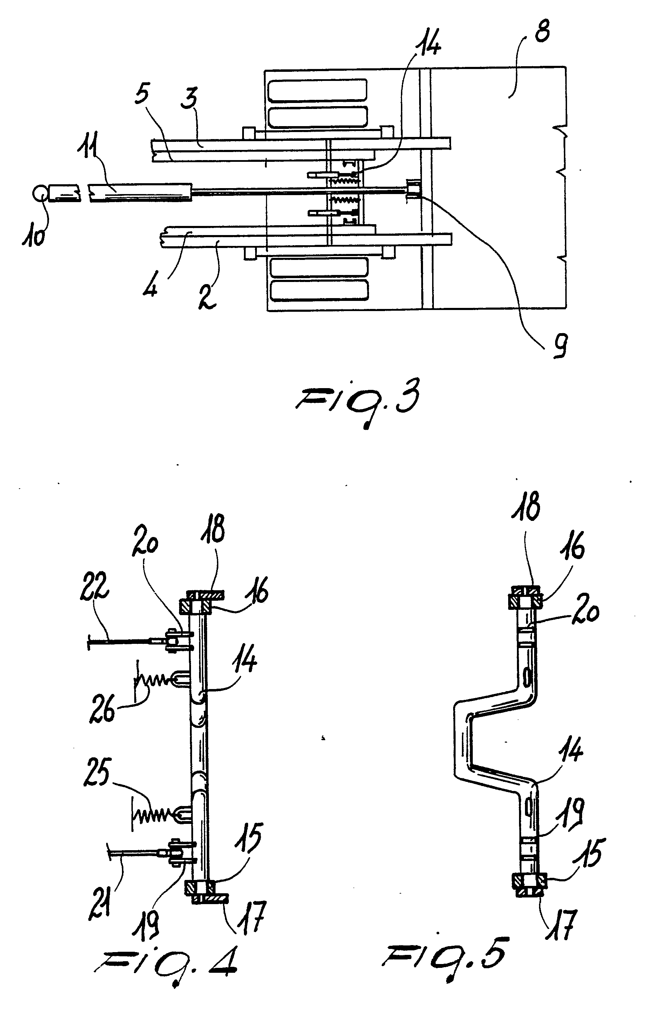

figure 3 is a schematic top plan view of the rear portion of the truck in the configuration of figure 2;

figure 4 is a top plan view of the device according to the present invention, installed on the truck of figures 1, 2 and 3;

figure 5 is an end elevational view of the device of figure 4.

With reference to the above described figures, a truck equipped for loading and transporting cars is generally indicated by the reference numeral 1 and comprises a rear chassis composed of two substantially parallel longitudinal members, respectively indicated by the reference numerals 2 and 3, and guides 4 and 5 respectively, advantageously composed of C-shaped profiled elements, fixed to the inner sides of said longitudinal members.

Corresponding rollers 6 are slidable in said guides 4, 5, and are rotoidally coupled to elements 7 which protrude downwardly with respect to the front portion of a platform 8 which normally rests on said longitudinal members 2 and 3.

The ends 9 and 10 of a double-action fluid-dynamic jack 11 are pivoted between said platform 8 and the front part of the chassis of the truck 1.

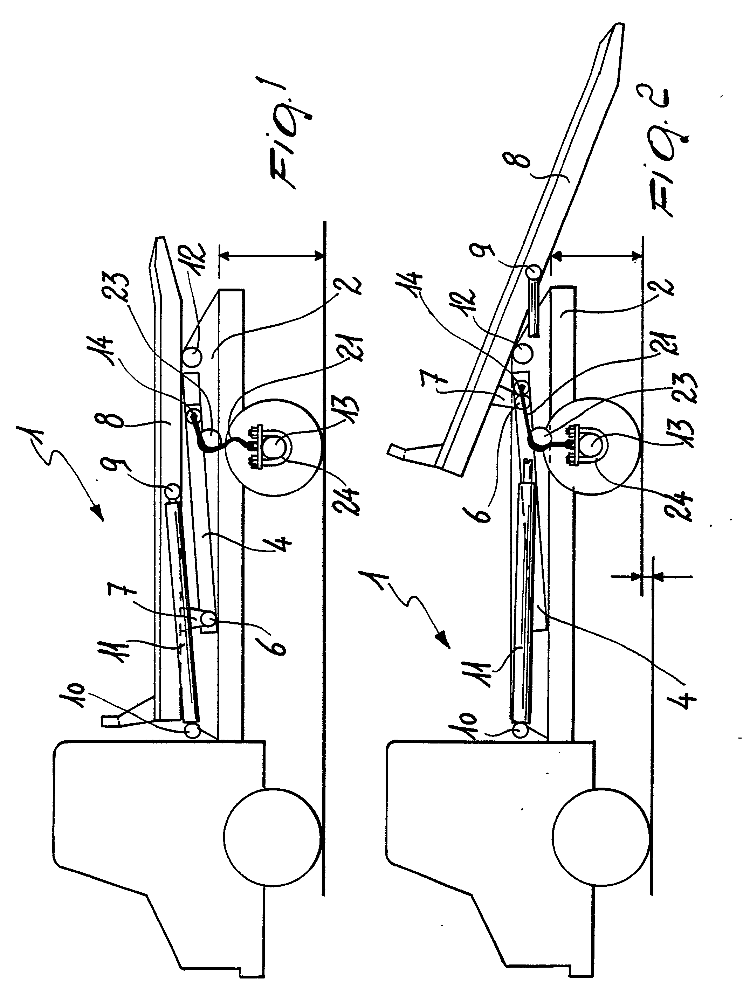

As illustrated in figures 1 and 2, the platform 8 is slidable on the members 2 and 3 by virtue of the actuation of the jack 11 and rests on rear rollers 12, so that it can be tilted backwards until it touches the ground at one end, to define a loading ramp.

A device for lowering the loading level of the platform 8 according to the invention is arranged between said guides 4 and 5 and the rear axle 13 of the truck 1, and expediently comprises a shaped bar 14, preferably made of steel and arranged transversely between said guides 4 and 5; said bar has two rollers respectively 15 and 16 at its ends and two corresponding pads 17 and 18 preferably made of a material commonly known by the Registered Trademark nylatron (POLYMER Co., Reading, U.S.A.).

Said rollers and said pads are contained inside said C-shaped guides 4 and 5 in their region comprised between said axle 13 and the rear end of the truck 1, thereby allowing forward and backward sliding of the bar 14.

Said bar 14 has two fork-like couplings, respectively indicated by the reference numerals 19 and 20, which are directed towards the front of the vehicle in positions adjacent to the ends of said bar; said couplings are adapted for pivotal engagement with corresponding ends of one or more cable-like traction elements 21 and 22 rigidly coupled to said rear axle 13 at their opposite ends.

Said traction elements are in fact transmitted by pulleys 23 arranged above said axle 13 and are coupled to U-bolts 24 fixed on said axle.

The ends of cylindrical spiral return springs 25 and 26 are fixed between said bar 14 and corresponding portions of the chassis arranged ahead of said bar, laterally of said fork-like couplings 19 and 20.

The rearward sliding of the platform 8 by means of the fluid-dynamic jack entails, towards the end of the stroke, the thrust of the rollers 6 on the ends of the bar 14 which is therefore caused to move backwards, tensioning the tension elements 21 and 22.

The traction exerted by the tension elements 21 and 22 on the axle 13 causes flexion of the suspension of the truck 1 with a consequent lowering of the loading platform, as can be seen by comparing figures 1 and 2.

When the platform 8 is returned to its initial configuration of figure 1, the bar 14 is returned to its initial position by virtue of the springs 25 and 26 which thus eliminate the lowering of the suspension.

It is thus evident that a device has been provided which allows to independently lower the suspension and return it to its original configuration, thereby lowering and raising the loading level, without requiring any special actuation operations.

The device according to the invention allows, in its idle configuration, the normal excursion of the suspension during travelling on roads.

Said device is furthermore composed of simple elements which are easy and rapid to assemble.

The aim and the objects of the present invention are thus achieved.

The invention thus conceived is susceptible to numerous modifications and variations, all of which are within the scope of the inventive concept.

All the elements may further be replaced with other technically equivalent details; thus, for example, the cable-like tension elements may be replaced with any deformable mechanical element adapted to transmit a traction force between a pair of rigid elements.

In practice, the material employed, as well as the dimensions, may be any according to the requirements.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Device for lowering a vehicle loading platform, characterized in that it comprises at least one element slidably coupled to the chassis of a vehicle and connected to the rear axle thereof by means of tension elements, with the interposition of transmission elements, a slidable tilt-down platform, and elastic return means co-operating with said element.

2. Device according to claim 1, characterized in that said element slidably coupled to the chassis is constituted by a shaped bar having rollers and pads, slidably accommodated in a corresponding shaped element fixable to a member of the chassis of a vehicle, said bar being therefore slidable backwards and forwards between two members of a chassis.

3. Device according to claims 1 and 2, characterized in that said tension elements each has ends fixed between a corresponding fork-like coupling rigidly associated with said bar and a corresponding U-bolt which embraces said rear axle, said transmission elements being constituted by pulleys arranged above said axle.

4. Device according to claims 1, 2 and 3, characterized in that said slidable tilt-down platform normally rests above said loading level, and protrusions extend below it in a front position, said protrusions bearing rotoidally associated rollers slidable within shaped guiding elements, the ends of a fluid-dynamic actuation jack being pivoted between said platform and said chassis,.

5. Device according to claims 1 to 4, characterized in that said bar is arranged between said rear axle and the rear of said vehicle, said platform, pushed by said jack to slide on said loading level by means of said rollers, pushing said bar to move backward.

6. Device according to claims 1 to 5, characterized in that said elastic means are constituted by cylindrical spiral springs with their ends fixed between said bar and portions of said chassis which are arranged ahead of said bar.

7. Device according to the preceding claims, characterized in that said tension elements comprise deformable mechanical elements adapted to transmit a traction force between two rigid elements.

Fig.1

Fig.2

EP 0 336 313 A1

Fig.3

Fig.4

Fig.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-3 209 218 (ALBERSINGER) <br> * pages 3-5; figures 1,2 * | 1,2 | B 60 P 3/12 |
| Y | FR-A-2 491 014 (HARANG) <br> * figures 1-6 * | 1,2 | |

TECHNICAL FIELDS SEARCHED (Int. Cl.4)

B 60 P 3/00

The present search report has been drawn up for all claims

| Place of search | Date of completion of the search | Examiner |
|---|---|---|
| BERLIN | 23-06-1989 | LUDWIG H J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)